(19) Europäisches Patentamt / European Patent Office / Office européen des brevets

(11) **EP 1 865 596 A1**

(12) **EUROPEAN PATENT APPLICATION**

(43) Date of publication:
**12.12.2007 Bulletin 2007/50**

(51) Int Cl.:
*H02P 21/00* ^(2006.01)    *B65H 51/00* ^(2006.01)

(21) Application number: **06425379.2**

(22) Date of filing: **05.06.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **L.G.L. Electronics S.p.A.**<br>**24024 Gandino (Bergamo) (IT)** | (72) Inventors:<br>• **Zenoni, Pietro**<br>  **24026 Leffe (BG) (IT)**<br>• **Gotti, Lucca**<br>  **24021 Albino (BG) (IT)**<br><br>(74) Representative: **Spandonari, Carlo et al**<br>**Spandonari & Modiano S.r.l.**<br>**Corso Duca degli Abruzzi 16**<br>**10129 Torino (IT)** |

(54) **A yarn feeding device driven by an induction motor**

(57)    The yarn winding arm (BR) of the flywheel (V) of a yarn feeder device is driven by an asynchronous induction motor (M). The motor is controlled through a speed feedback loop including a first comparator (i) for subtracting a speed reference signal *(sp_ref)* from a measured motor speed *(sp_meas)* to provide a speed error signal *(sp_err)* and driving a control circuit which controls the phase voltages *(Vsa, Vsb, Vsc)* to the motor. A first converter block (6) transforms instantaneous motor current values *(Ia, Ib, Ic)* and a motor speed measure *(sp_meas)* into a rotating current vector (Is) comprising a direct component *(Isd)* and a quadrature component *(Isq)* and into a rotor flux vector *(rot_flux)* in a first, stationary reference frame *(alfa, beta)* and then converts the stationary reference frame to a rotating frame *(d, q)*. Second converting means (2, 3) convert the speed error signal *(sp_err)* and the rotor flux vector *(rot_flux)* into a reference quadrature current magnitude *(Isq_ref)* corresponding to the estimated magnitude of the current component at right angles to the rotor flux. Regulating means (4, 5, 7) are driven by the rotating current vector *(Is, Isq)*, by the rotor flux vector *(rot_flux)* and by the quadrature current magnitude *(Isq_ref)* to regulate the magnitude of the rotor flux in said motor.

Fig. 1

**Description**

This invention relates to a yarn feeding device for weaving or knitting machines, and more particularly a yarn feeding device driven by an asynchronous induction motor.

Yarn feeding devices in weaving machines are usually driven by synchronous, permanentmagnet brushless motors. One such yarn feeding device is disclosed in WO 03/029121, in which the speed of the brushless motor driving the winding member of the device is vector controlled by a method which uses the rotor position information for sinusoidally controlling the motor. This is done because, as a person skilled in the art will appreciate, the torque in a PMSM, or Permanent Magnet Synchronous Motor, is controlled by injecting in the stator winding a triad of currents such that the resulting rotating stator field is at all times directed at 90° to the rotor flux vector. WO 03/029121 also discloses that the rotor position is detected by means of sensors or, alternatively, that the rotor position is obtained by indirectly measuring the stator's counter electromotive force (sensorless measuring).

It would be desirable to use the same vector control technique with other kinds of electric motors, particularly with asynchronous induction motors, because the latter, due to their widespread use, are cheaper than brushless motors, whose rotors often incorporate expensive permanent magnets based on rare earths (such as neodymium). Although the torque delivered by an induction motor is usually smaller (by about 10 to 20%) than the torque obtained from a similarly sized brushless motor, this small drawback can be easily compensated by injecting a larger current: this injection gives rise to a small increase of the absorbed power, which disadvantage, however, is largely offset by the advantage of the lower cost of the induction motor.

As a further consideration, controlling the asynchronous induction motor has been traditionally regarded as being more complex and expensive than controlling the synchronous brushless motor. While this was substantially true until the recent past, today the development of digital electronic components (particularly DSP-based hybrid controllers) has drastically lowered the cost of this type of control, which in the past used to be regarded as too complex for the power of a microcontroller.

Moreover, it should be noted that, by using the technique of vector control, one can instantaneously control the electromotive torque of the motor, and consequently, by implementing a speed feedback, it is possible to draw, at each operating condition, only the current that is strictly necessary for overcoming the load torque applied to the winding element. Therefore such technology, if compared with simpler controls such as a scalar control with constant voltage/ frequency characteristic (see, e.g. EP-1 050 611), involves the advantage of requiring the least possible current absorption, thereby decreasing the additional power dissipation of the motor.

It is therefore the main object of the invention to provide a yarn feeding device driven by an asynchronous induction motor, which achieves a performance comparable to yarn feeding devices based on synchronous brushless motors, while avoiding an increase of either the power absorbed by the motor or the overall cost of the device.

The above and other objects and advantages, such as will appear from the disclosure, is attained by the invention by a yarn feeding device driven by an induction motor, having the features recited in claim 1.

A few preferred embodiments of the invention are described below, with reference to the attached drawings, wherein:

Fig. 1 is a simplified illustration of a weft feeding device of a weaving machine, including a block diagram of an associated control circuit, according to the invention;

Fig. 2 and Fig. 3 are vector diagrams which help to illustrate the operation of the control circuit of Fig. 1;

Fig. 4 is a schematic representation of a flywheel provided with a Hall sensor, as used with one of the preferred embodiments of the invention;

Fig. 5 is a partial block diagram of a variant of the block diagram of Fig. 1;

Fig. 6 is a partial block diagram of another variant of the block diagram of Fig. 1; and

Fig. 7 is a partial block diagram of a further variant of the block diagram of Fig. 1.

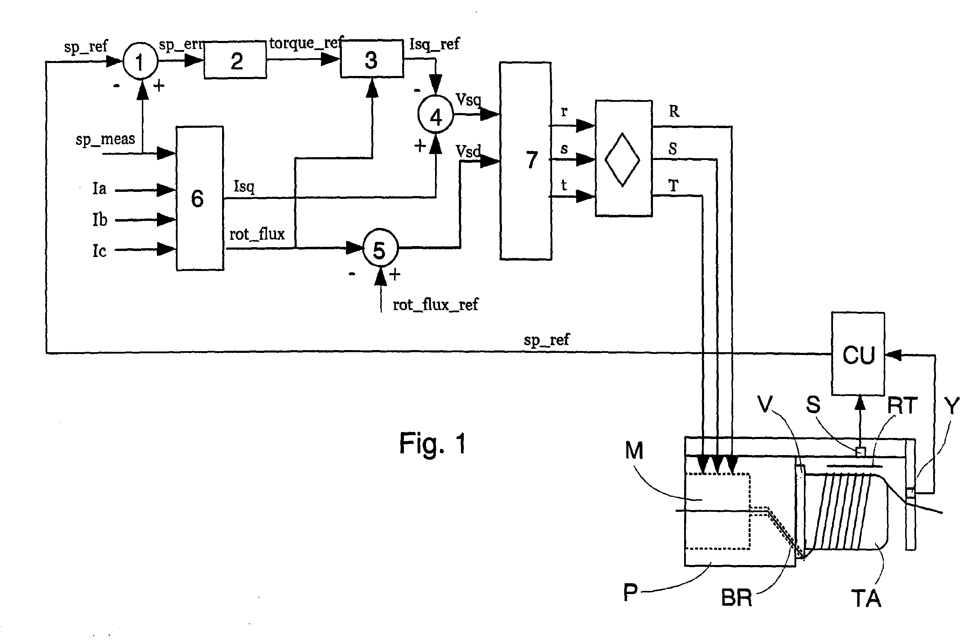

In Fig. 1, a weft feeding device comprises a housing P in which an asynchronous induction motor M drives a coaxial flywheel V, integral with a yarn channel BR for delivering a yarn RT to be wound on a stationary storage drum TA. A weft supply sensor S detects whether a yarn reserve is available in a predetermined scanning area of the storage drum, and a yarn unwinding sensor Y delivers a pulse as each yarn loop unwinds from the storage drum. A processor unit CU receives the information from sensors S and Y, determines the speed required to maintain an appropriate yarn reserve on the drum, and generates a speed reference signal sp_ *re*f indicating the desired speed of flywheel V.

The speed reference signal *sp_ref* from processor unit CU is applied to a subtractor 1, which compares it with a signal *sp_meas* indicating the actual current speed of the motor, and obtained by any of several known ways, some of which will be discussed below in the course of this disclosure. The result of the comparison is a speed error signal *sp_err* that is applied to a compensation block 2, which is a conventional calculating block known per se, and is typically either of the proportional-integral type (PI) or of the proportional-integral-derivative type (PID). Block 2 transforms *sp_err* into a correction output *torque_ref,* i.e. the torque that is required from the motor so that the motor speed error is neutralized.

In both the induction motor and the brushless motor the following relationship must hold:

$$Te = np * Isq * \psi \qquad\qquad (1)$$

where *Te* is the electromotive torque delivered by the motor, np is the number of pole pairs, $\psi$ is the magnitude of the rotor flux, and *Isq* is the magnitude of the current component at right angles to the rotor flux.

The rotor flux $\psi$ is normally adjusted to the highest feasible value that will not over-saturate the ferromagnetic circuit of the motor. Since the rotor flux is kept at a constant value, it follows that *Isq* is proportional to the desired torque. This circumstance is generally used in controlling brushless motors, particularly as the rotor flux, in this type of electric motor, is provided "freely" by the permanent magnets built into the rotor. By contrast, the rotor flux of an induction motor is generated by the slip between the stator's rotating field and the rotor itself, and draws a flux-feeding current component *Isd* of current Is. The invention provides a way to reconstitute the rotor flux vector, based on the knowledge of the motor speed, i.e. *sp_meas.*

Accordingly, the position and magnitude *rot_flux* of the rotor flux is computed in logic block 6, starting from the instantaneous currents read from the motor *(Ia, Ib, Ic)* and from the measured motor speed *(sp_meas).* To that purpose block 6 performs substantially the following steps:

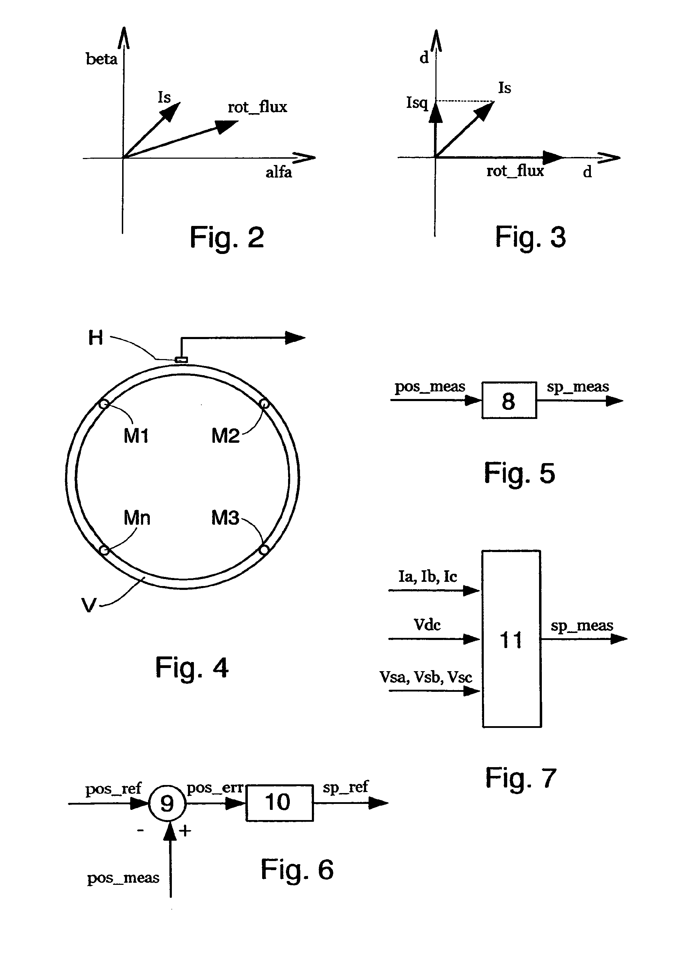

a) Starting from the instantaeous values of the stator currents *Ia, Ib* and *Ic*, block 6, by means of a direct Clarke transform, computes a current vector Is that rotates with respect to stationary axes *alfa, beta* (see diagram of Fig. 2). It should be appreciated that vector *Is* represents a sort of vector equivalent of the motor currents, rotating in alignment with the rotating field of the stator. In practice, of the three stator currents *Ia, Ib* and *Ic*, only two, *Ia, Ib,* have to be measured, the third current *Ic* being easily calculated, since the sum of the three currents must be o.

b) Block 6 then computes the angle and magnitude of the rotor flux *rot_flux,* on the basis of said vector Is, of the measured motor speed *sp_meas,* and of obvious characteristic parameters of the motor (such as the rotor constant). The rotor flux is also a rotating vector with respect to the same stationary axes *alfa, beta* (see diagram of Fig. 2).

c) Further to the above, block 6 also performs a further, similar calculation, by projecting the current vector Is upon a system of rotating axes d, *q* (see diagram of Fig. 3), such that axis d, also called "direct axis", coincides with the direction of the rotor flux. This projection may be computed by means of a direct Park transform. In the new reference frame, the component of Is along the quadrature axis is called *Isq*.

According to the invention, therefore, a subsequent block 3 processes *torque_ref* and *rot_flux* to provide a signal *Isq_ref* by means of the following relationship, that is based on the above relationship (1):

$$Isq\_ref = \frac{torque\_ref}{np * rot\_flux}$$

For a more detailed explanation of the principles underlying the implementation of block 6, see Werner Leonhard, *Control of Electrical Drives,* 3rd edition, (ISBN 3-540-41820-2 ), particularly Chapter 12 ("Control of induction motor driver"), or *DRMo23/D Design Reference Manual,* Freescale Semiconductor Rev.o, 03/2003.

After both the rotor flux vector and the current have been referred to the coordinate frame (d, *q)* by means of the above transformations, three operating steps are performed:

d) As a first step, the magnitude of the rotor flux (which necessarily coincides with the component along axis *d)* is controlled so that the motor is properly fluxed under every operating condition. This is done by block 5, which executes a feedback by comparing *rot_flux* with *rot_flux_ref* and generating an output signal *Vsd,* i.e. a voltage to be applied to the motor along axis d, so that the difference *rot_flux_ref* - rot_flus is brought down to zero.

e) As a second step, the stator current component *Isq* at right angles to the rotor flux is controlled by block 6. Similarly to the brushless motor, *Isq* is directly proportional to the electromagnetic torque. This control is performed by block 4, which executes a feedback by comparing the *Isq* with *Isq_ref* and generating an output signal *Vsq,* i.e. a voltage to be applied to the motor along axis q, so that the difference between such quadrature current reference and the current read along axis q *(Isq)* is brought down to zero.

f) As a third step, block 7, starting from voltages *Vsq* and *Vsd,* executes an inverse Parke transform from rotating axes d, *q* to stationary axes *alfa, beta* and then an inverse Clarke transform, thereby obtaining the values of three phase voltages *Vsa, Vsb* and Vsc (not shown in the drawings) that should be applied at the three phases of the motor. These values, transformed into pulse-width-modulated signals r, s and *t*, are then applied to a three-phase bridge B, and from there to the stator windings of motor M.

The speed of the motor (sp_meas) may be measured by any of the following approaches, depending on the type of sensors available :

1. According to a first approach, and assuming that flywheel V has n magnets $M_1$, $M_2$, $M_3$, Mn, uniformly spaced on its periphery, as shown in Fig. 4, and a stationary Hall sensor H, the speed can be obtained by measuring the time delay *Dt* from one transition of the Hall signal to the next. More particularly, the speed, in r.p.m., is obtained by the formula:

$$sp\_meas = \frac{60}{n \cdot Dt}$$

2. If an absolute position sensor is available, another approach is appropriate, as shown in Fig. 5, where the speed signal *sp_meas* is obtained by differentiation of the absolute position signal, *pos_meas,* in a differentiator block 8, known per se.

In the latter case, the availability of an absolute position signal makes it feasible to implement, in addition to a speed feedback, also a position control loop, shown in Fig. 6. A subtractor 9 compares a position reference signal *pos_ref,* supplied by the user, with a measured absolute position value *pos_meas* obtained from the above-mentioned absolute position sensor. The difference, *pos_err,* is transformed by a compensation block 10, similar to compensation block 2 of Fig. 1, into an appropriate reference signal *sp_ref,* which can be applied to subtractor 1 in Fig. 1 in lieu of the speed reference signal normally supplied by the processor unit CU. This addition to the control unit of the invention would enable the user, e.g., to establish a definite position of the yarn winding member in a procedure of automatic threading of the yarn feeding device. In practice, *sp_ref* would be normally generated by CU as shown in Fig. 1, and the substitute signal from Fig. 6 would temporarily be switched in at desired instants, i.e. whenever a threading operation is required.

3. According to a further, sensorless approach, the motor speed, rather than being measured directly, is computed indirectly from a number of electrical parameters. With reference to Fig. 6, block 11 receives as inputs the instantaneous values of the three motor currents Ia, Ib, Ic, the bus voltage *Vdc* on the inverter bridge, optionally also the measured phase voltages Vsam, *Vsbm, Vscm* (not shown), and, moreover, several obvious structural parameters depending on the construction of the motor. The above values are processed in block 11 to obtain a reasonably accurate estimate of the motor speed, *sp_meas,* by means of any of several known algorithms, for instance as described in the above-mentioned Werner Leonhard, Control of Electrical Drives, 3rd edition (ISBN 3-540-41820-2) or in "Sensorless Control of AC Motor Drives" (ISBN 0-7803-1046-2), particularly in the first section (Speed sensorless control of induction motors).

It should be understood that all the above-mentioned control blocks (vector control, speed/position adjustment loop, etc.) may be integrated into a single control circuit, and more particularly they may be coded in a form that is executable by a microcontroller having an adequate computational power and provided with suitable peripherals, as obvious for a person skilled in the art, such as fast A/D converters with multiple sample-and-hold circuits, timers, PWM modulators, etc.

**Claims**

1. A yarn feeding device for a textile machine comprising a flywheel (V) integrally carrying a yarn winding arm (BR), adapted to rotate for winding a yarn (RT) on a storage drum (TA), and driven by vector-controlled electric motor means controlled through a speed feedback loop including a first comparator (1) for subtracting a speed reference signal *(sp_ref)* from a measured motor speed *(sp_meas)* to provide a speed error signal *(sp_err)* and driving a control circuit which controls the phase voltages *(Vsa, Vsb, Vsc)* to the motor means, **characterized in that** the motor means is an asynchronous induction motor (M) and **in that** the control circuit in the feedback loop comprises :

   - first converting means (6) for transforming instantaneous motor current values *(Ia, Ib, Ic)* and a motor speed measure (sp_meas) into a rotating current vector *(Is)* comprising a direct component *(Isd)* and a quadrature component *(Isq)* and a rotor flux vector *(rot_flux)* in a first, stationary reference frame *(alfa, beta)* and then converting the stationary reference frame to a rotating frame *(d, q);*
   - second converting means (2, 3) for converting said speed error signal *(sp_err)* and said rotor flux vector *(rot_flux)* into a reference quadrature current magnitude *(Isq_ref)* corresponding to the estimated magnitude of the current component at right angles to the rotor flux; and
   - regulating means (4, 5, 7) driven by said rotating current vector *(Is, Isq)* and said rotor flux vector *(rot_flux)* generated by the first converting means and by said reference quadrature current magnitude *(Isq_refl* generated by the second converting means, and regulating the magnitude of the rotor flux in said motor.

2. The yarn feeding device of claim 1, **characterized in that** the second converting means (2, 3) comprise a first proportional-integro-derivative block (2) to transform said speed error signal *(sp_err)* into a torque reference signal *(torque_ref)* and a divider block (3) for dividing said torque reference signal by said rotor flux vector *(rot_flux)* and by the number of pole pairs of said induction motor, thereby generating said reference quadrature current magnitude *(Isq_ref).*

3. The yarn feeding device of claim 2, **characterized in that** said regulating means (4, 5, 7) comprise a second comparator (4) for comparing the measured quadrature current component *(Isq)* with said reference quadrature current magnitude *(Isq_ref),* and a third comparator (5) for comparing said rotor flux vector *(rot_flux)* with a reference rotor flux vector *(rot_lux_ref),* the outputs from the second and third comparator driving a reverse-transforming block (7) for regulating the magnitude of the rotor flux in said motor (M).

4. The yarn feeding device of any of claims 1 to 3, **characterized in that** said flywheel (V) is provided with at least one detectable identifier ($M_1$, $M_2$, $M_3$, Mn) on its periphery, and **in that** the motor speed signal *(sp_meas)* is obtained by measuring the time delay between successive detections of said at least one identifier by a stationary detector (H).

5. The yarn feeding device of any of claims 1 to 3, **characterized in that** said flywheel is provided with an absolute position sensor delivering an absolute position signal *(pos_meas)* that is differentiated to obtain said motor speed signal *(sp_meas).*

6. The yarn feeding device of claim 5, **characterized in that** it further comprises a fourth comparator (9) for comparing said absolute position signal (pos_meas) with a desired position reference signal *(pos_ref)* and for applying a resulting position error signal *(pos_err)* to a second proportional-integro-derivative block (10), whose output is switchable as input to said first comparator (1) in lieu of the speed reference signal *(sp_ref)* at desired instants, whereby the flywheel is positioned for purposes of automatic threading.

7. The yarn feeding device of any of claims 1 to 3, **characterized in that** the measured motor speed signal *(sp_meas)* is computed from the instantaneous values of the three motor currents *(Ia, Ib, Ic)* on the inverter bridge.

8. The yarn feeding device of claim 7, **characterized in that** the computation of the motor speed signal *(sp_meas)* is also based on the measured phase voltages *(Vsam, Vsbm, Vscm)* on the windings of the motor (M).

Fig. 1

Fig. 2

Fig. 3

Fig. 4

Fig. 5

Fig. 6

Fig. 7

**European Patent Office**

**EUROPEAN SEARCH REPORT**

Application Number

EP 06 42 5379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 1 050 611 A2 (LGL ELECTRONICS SPA [IT]) 8 November 2000 (2000-11-08) * figures 1,2 * | 1-8 | INV. H02P21/00 B65H51/00 |
| Y | EP 1 523 089 A (TSUDAKOMA IND CO LTD [JP]) 13 April 2005 (2005-04-13) * paragraphs [0011], [0014] - [0017]; figures 1-3,11-13 * | 1-8 | |
| A | US 6 194 856 B1 (KOBAYASHI SUMIO [JP] ET AL) 27 February 2001 (2001-02-27) * column 1, line 50 - column 2, line 34; figure 15 * * column 21, line 19 - column 22, line 7 * | 1-8 | |
| A | US 5 211 207 A (ICHIKAWA MICHIHIRO [JP]) 18 May 1993 (1993-05-18) * column 4, lines 30-68; figures 1,2 * | 1-8 | |
| A | US 5 459 386 A (OKACHI HIROAKI [JP] ET AL) 17 October 1995 (1995-10-17) * column 2, line 23 - column 4, line 16; figures 7,8,18 * | 1-8 | TECHNICAL FIELDS SEARCHED (IPC) H02P |
| A | EP 1 050 610 A2 (LGL ELECTRONICS SPA [IT]) 8 November 2000 (2000-11-08) * paragraphs [0001], [0028]; figures 1-6 * | 1-8 | |

The present search report has been drawn up for all claims

| Place of search | Date of completion of the search | Examiner |
|---|---|---|
| The Hague | 20 November 2006 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 06 42 5379

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2006

| Patent document cited in search report | | Publication date | Patent family member(s) | | Publication date |
|---|---|---|---|---|---|
| EP 1050611 | A2 | 08-11-2000 | DE | 60012406 D1 | 02-09-2004 |
| | | | DE | 60012406 T2 | 28-07-2005 |
| | | | IT | T0990370 A1 | 07-11-2000 |
| EP 1523089 | A | 13-04-2005 | CN | 1606230 A | 13-04-2005 |
| | | | JP | 2005117761 A | 28-04-2005 |
| | | | KR | 20050033795 A | 13-04-2005 |
| US 6194856 | B1 | 27-02-2001 | NONE | | |
| US 5211207 | A | 18-05-1993 | DE | 4139583 A1 | 02-07-1992 |
| | | | IT | 1250363 B | 07-04-1995 |
| | | | SE | 9103809 A | 22-06-1992 |
| US 5459386 | A | 17-10-1995 | DE | 69304363 D1 | 10-10-1996 |
| | | | DE | 69304363 T2 | 20-02-1997 |
| | | | EP | 0555844 A1 | 18-08-1993 |
| | | | JP | 2755011 B2 | 20-05-1998 |
| | | | JP | 5227779 A | 03-09-1993 |
| EP 1050610 | A2 | 08-11-2000 | DE | 60013683 D1 | 21-10-2004 |
| | | | DE | 60013683 T2 | 10-02-2005 |
| | | | IT | T0990369 A1 | 07-11-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03029121 A

- EP 1050611 A

**Non-patent literature cited in the description**

- **WERNER LEONHARD.** Control of Electrical Drives

- Sensorless Control of AC Motor Drives